Europäisches Patentamt

European Patent Office

Office européen des brevets

(11) Veröffentlichungsnummer: **0 265 902**

**A2**

# (12) EUROPÄISCHE PATENTANMELDUNG

(21) Anmeldenummer: 87115727.7

(22) Anmeldetag: **27.10.87**

(51) Int. Cl.⁴: **G01S 13/78** , **G01S 13/93** ,
**G01S 5/12**

(30) Priorität: 31.10.86 DE 3637129

(43) Veröffentlichungstag der Anmeldung:
**04.05.88 Patentblatt 88/18**

(84) Benannte Vertragsstaaten:
**FR GB IT**

(71) Anmelder: **Deutsche Forschungs- und
Versuchsanstalt für Luft- und Raumfahrt e.V.
Linder Höhe Postfach 90 60 58
D-5000 Köln 90(DE)**

(72) Erfinder: **Schnittger, Hans-Jürgen, Dipl.-Ing.
Joseph-Fraunhofer-Strasse 41
D-3300 Branschweig(DE)**

(74) Vertreter: **Gralfs, Harro, Dipl.-Ing.
Am Bürgerpark 8
D-3300 Braunschweig(DE)**

(54) Verfahren zur Positionsbestimmung eines Flugzeuges in einem Dreiweg-DME-System.

(57) Zur Abstandsmessung eines Flugzeuges in einem Dreiweg-DME-System wird vom Bordsystem eines an einer Abfrage unbeteiligten Flugzeuges (1) während der Abfrage eines anderen Flugzeuges die Laufzeit des Bodensignals direkt und zusätzlich die Laufzeit des Bodensignals zum abfragenden Flugzeug zuzüglich der Laufzeit des Antwortsignals des abfragenden Flugzeuges zu dem an der Abfrage unbeteiligten Flugzeug gemessen. Unter Verwendung der übermittelten Angaben über Höhe und Azimut des abfragenden Flugzeuges und der eigenen Position wird die Position des abfragenden Flugzeuges mit den drei Standflächen bestimmt.

Fig. 1

EP 0 265 902 A2

## Verfahren zur Positionsbestimmung eines Flugzeuges in einem Dreiweg-DME-System

Die Erfindung bezieht sich auf ein Verfahren zur Positionsbestimmung eines Flugzeuges·in einem Dreiweg-DME-System nach dem Oberbegriff des Patentanspruches 1.

Ein wesentliches Problem in der Luftfahrt ist die Kollisionsverhütung. Beim Kollisionsschutz gibt es prinzipiell zwei verschiedene Konzepte. Das eine Konzept sieht den Einsatz von -bodengestützten Systemen (ground based collision prevention systems) vor, das andere den Einsatz von -bordgestützten Systemen (Airborne Collision Avoidance Systems - ACAS).

Bodengestützte Systeme haben unter bestimmten Randbedingungen Vorteile gegenüber ACAS-Systemen. Ein Vorteil ist z.B., daß ein bodengestütztes System auf einfache Weise Informationen mit konventionellen ATC-Systemen austauschen kann und eine im Vergleich zum ACAS erheblich geringere Anzahl von Fehlalarmen ermöglicht.

Trotzdem wird allgemein das ACAS favorisiert. Die Communications/Operations Divisional Conference (COM/OPS/85) der International Civil Aviation Organisation (ICAO) vertritt die Auffassung. daß ein wirksamer Schutz vor Kollisionen zwischen Luftfahrzeugen nur mittels bordautonomer Systeme zu erreichen ist. Die Konferenz stimmte darin überein, daß kurzfristig nur dann der größte Nutzen in diesem Bereich zu erwarten sei, wenn sich die Arbeiten weiterhin auf ACAS-Systeme konzentrierten.

In den letzten zwei Jahrzehnten hat es die verschiedenartigsten Systemvorschläge für Kollisionsschutz gegeben, darunter kooperative Systeme mit synchroner oder statistischer Abfrage. Alle diese Systeme - scheiterten am Problem der Einführung, insbesondere weil kooperative Systeme ihrem Nutzer nur dann einen ausreichenden Schutz bieten, wenn alle Luftfahrzeuge mit einem kooperativen System ausgestattet sind. Der Anreiz, ein solches Gerät zu kaufen, ist sehr gering, da die ersten Käufer praktisch keinen Nutzen davon haben.

Das Einführungsproblem umgehen all jene Systeme, die als kooperativen Bestandteil bereits standardisierte und eingeführte Bordgeräte benutzen. Es eignen sich aber nur solche Bordgeräte, die ein von außen her erkennbares Signal erzeugen. Es gibt nur zwei international standardisierte Geräte dieser Art. Dies sind -der Sekundärradartransponder SSR und -das Entfernungsmeßsystem DME.

Aus der Sicht des Kollisionsschutzes bietet der Sekundärradartransponder zunächst die besseren Möglichkeiten.

Auf dem SSR basierende Kollisionsschutzsysteme haben jedoch den Nachteil, daß sie nicht den Richtungswinkel zu einem fremden Flugzeug messen können. Ferner ist die Datenerneuerungsrate relativ gering, so daß Bedrohungen, die von einem manövrierenden Flugzeug ausgehen, nur schwer beurteilt werden können.

In der Vergangenheit gab es einige, das DME betreffende Änderungsvorschläge (Becker, A. "Integrated Navigation, Communication, and Surveillance Systems Based on Standard Distance Measuring Equipment", Journal of Aircraft, Vol. 23, No. 5 May 1986, Ullrich, R., "Ein Luftraumüberwachungssystem auf der Basis des Dreiweg-DME", Teil 1: Das Meßwerterzeugungssystem, DFVLR, Institut für Flugführung, Institutsbericht IB 112-86/06, Juni 1986, und EP-A-O 175 967).

Ein DME-Änderungsvorschlag ist das Dreiweg-DME mit Datenübertragung. Da dieses System nicht ICAO-standardisiert ist, soll im folgenden das Prinzip beschrieben werden:

Beim Dreiweg-DME wird der DME-Transponder durch ein Transponderzusatzgerät erweitert. Das Zusatzgerät enthält als wesentlichen Bestandteil eine Laufzeitmeßeinrichtung. Eine DME-Bordabfrage wird vom Transponder in gewohnter Weise beantwortet. Wenn jedoch die Laufzeitmeßeinrichtung nicht belegt ist, wird die DME-Antwort markiert und die Laufzeitmeßeinrichtung zum Zeitpunkt des Aussendens der markierten DME-Antwort gestartet. Das Bordgerät empfängt die DME-Antwort und führt mit Hilfe der bekannten Standardverfahren die Entfernungsmessung durch. Das abfragende Bordgerät erkennt auch, daß die empfangene Bodenantwort markiert war. Es sendet deshalb nach einer genau definierten Verzögerungszeit eine markierte Antwort zurück. Diese wird am Boden vom Transponder eindeutig als solche erkannt und stoppt die Laufzeitmessung.

Zusätzlich zur Entfernungsmessung ist eine Datenübertragung von Bord des Flugzeugs zur Bodenstation realisiert. Die Information wird hierbei in pulsabstandscodierter Form übertragen, wobei die Bordantwort des Dreiweg-DME als Referenz dient. Als Datenworte werden die Höhe und eine Flugzeugkennzahl sowie gegebenenfalls der Azimutwinkel übertragen. Der Azimutwinkel kann auch am Boden ermittelt und zun Flugzeug übertragen werden.

Solange die Laufzeitmeßeinrichtung am Boden belegt ist, werden keine weiteren DME-Antworten markiert. Dadurch ist immer eine eindeutige Entfernungsmessung und Datenübertragung gewährleistet.

Durch den Dreiweg-DME-Zusatz wird das Standard-DME zu einem Luftraumüberwachungssystem erweitert.

Die konzeptionellen Vorteile des Dreiweg-DME sind:

-Integriertes Navigations-und Überwachungssystem

-Vollständige Positionsinformation an Bord und Boden

-Mit dem standardisierten DME voll kompatibel

-Kein zusätzlicher Frequenzbedarf. (Die Datenworte Azimut, Höhe und Kennung werden auf demselben Frequenzkanal wie die Entfernungsinformation übertragen).

Aufgabe der Erfindung ist es, im Rahmen des Dreiweg-DME-Systems ein bordgestütztes Kollisionsschutzverfahren zu schaffen, das selbst kein besonderes System benötigt und das für jedes für die Teilnahme am Dreiweg-DME ausgerüstete Flugzeug individuell Entfernungsmessungen zu anderen Flugzeugen ermöglicht.

Diese Aufgabe wird gemäß der Erfindung gelöst durch die im kennzeichnenden Teil des Patentanspruches 1 herausgestellten Merkmale.

Der Vorteil des erfindungsgemäßen Verfahrens besteht darin, daß die Entfernungsmessung von jedem passiv an einer Abfrage beteiligten Flugzeug durchgeführt werden kann.

Die Erfindung ist in der Zeichnung beispielsweise veranschaulicht und im nachstehenden im einzelnen anhand der Zeichnung beschrieben.

Fig. 1 zeigt das Prinzip der Standortbestimmung bei einem Dreiweg-DME-Kollisionsschutzverfahren.

Fig. 2 zeigt den geometrischen Ort aller Punkte für ein Signal gleichen Umwegs von der Bodenstation zu einem Flugzeug, das eine bordgestützte Entfernungsmessung zu einem anderen Flugzeug durchläuft, das eine Dreiweg-DME-Abfrage durchführt.

Im nachstehenden wird für ein Flugzeug, das eine Dreiweg-DME-Abfrage durchführt, der Ausdruck "abfragendes" Flugzeug gewählt, während ein eine Entfernung zu diesem Flugzeug messendes Flugzeug "als abstandsmessendes Flugzeug" bezeichnet wird. Die Durchführung einer Abfrage einer Dreiweg-DME-Bodenstation durch ein Flugzeug ist bekannt, beispielsweise aus der EP-A-O 075 967, und muß daher hier nicht in allen Einzelheiten beschrieben werden. Im nachstehenden werden daher nur solche Einzelheiten beschrieben, die für das Verständnis der Erfindung erforderlich sind.

Die Erfindung geht davon aus, daß die am Dreiweg-DME-Verfahren beteiligten Flugzeuge ihre Signale mit einer Rundantenne abstrahlen und daß auch die DME-Bodenstation ihre Signale zumindest über große Sektoren abstrahlt. Damit können die von dem abfragenden Flugzeug bzw. der DME-Bodenstation ausgesandten Signale auch von dritten Flugzeugen innerhalb eines relativ großen Raums empfangen werden. Diese Tatsache wurde bisher in keiner Weise als vorteilhaft angesehen, da der Verkehr zwischen dem abfragenden Flugzeug und der DME-Bodenstation für Dritte uninteressant war.

Die Erfindung beruht nun auf einem gezielten Mithören der Antworten auf Abfragen der Dreiweg-DME-Bodenstation und Auswertung dieser Antworten für eine Kollisionsschutzentfernungsmessung zu dem abfragenden Flugzeug.

Die Kollisionsschutzmessung wird dabei im einzelnen wie folgt durchgeführt.

Zum Zeitpunkt $t_0$ wird am Boden von einer DME-Bodenstation 3 für ein abfragendes Flugzeug 2 ein Dreiweg-DME Abfrageimpuls ausgesendet. Dieser Impuls wird vom Kollisionsschutzsystem des abstandsmessenden Flugzeugs 1 zum Zeitpunkt $t_1$ als solcher erkannt. Der Impuls hat in der Zeit $t_1-t_0$ die Strecke $Þ_1$ durchlaufen. Es gilt

(1)     $t_1-t_0 = Þ_1/c$.

(c ... Lichtgeschwindigkeit)

Das zum Zeitpunkt $t_{12}$ im Flugzeug 1 empfangene Antworttelegramm des Flugzeugs 2 hat einschießlich der sie verursachenden Abfrage der Bodenstation 3 die Wege $Þ_2 + Þ_{12}$ durchlaufen. Es gilt

(2)     $t_{12}-t_0 = (Þ_2 + Þ_{12})/c$.

Aus Gl. (1) und Gl. (2) folgt die Zeit zwischen dem Empfang einer Abfrage und dem Empfang der fremden Antwort

(3)     $t_{12}-t_1 = (Þ_2 + Þ_{12} -Þ_1)/c$.

Diese Zeit ist die Umweglaufzeit und kann von dem Flugzeug 1 sehr genau gemessen werden. Die Geräte-Verzögerungszeiten, die bekannt sind, sind zusätzlich durch deren Subtraktion zu berücksichtigen.

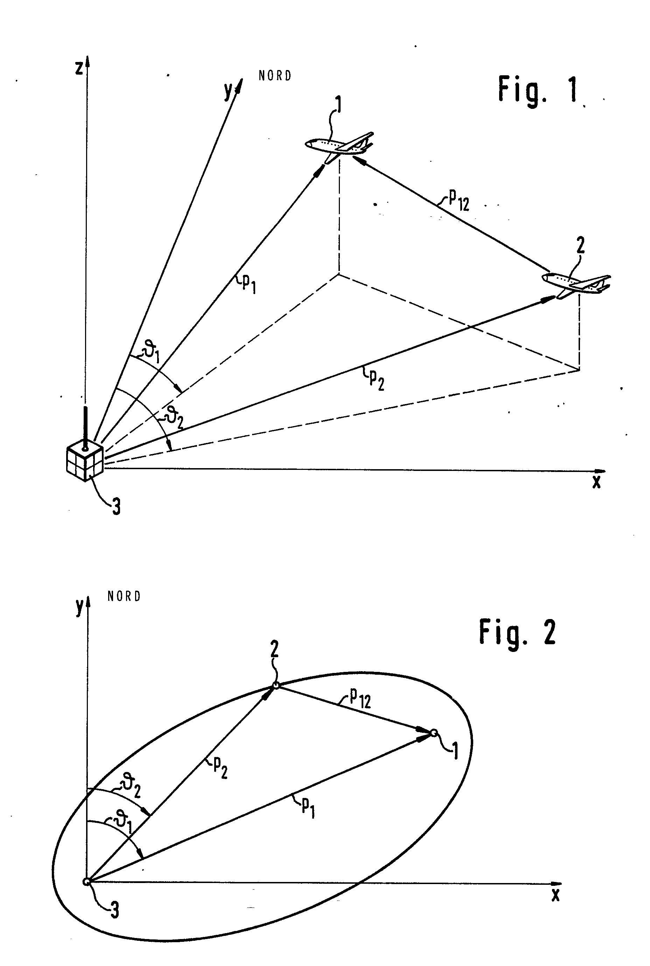

Die Gl. (3) beschreibt ein Ellipsoid (vergl. Fig. 2), dessen einer Brennpunkt in der Bodenstation 3 und dessen anderer im Flugzeug 1 liegt. Dieses Ellipsoid ist der geometrische Ort für Flugzeuge mit gleichen Umweglaufzeiten.

Das Flugzeug 1 hört zusätzlich noch die Boden→ Bord bzw. Bord→Boden Datenübertragung ab. Im Falle einer Boden→Bord Datenübertragung ist der Bezugszeitpunkt für die pulsabstandscodierten Informationen der Zeitpunkt $t_1$, im Falle einer Bord→Boden Datenübertragung der Zeitpunkt $t_{12}$. Von dem Flugzeug 2 sind somit noch das Azimut $\theta_2$ und die barometrische Höhe $z_2$ bekannt. Als bekannt kann auch die Position $(x_1, y_1, z_1)$ des eigenen Flugzeugs vorausgestzt werden. Mit Hilfe dieser Daten wird die vollständige Position $(x_2, y_2, z_2)$ des abfragenden Flugzeuges eindeutig bestimmt. Die dazu notwendige Rechnung ist relativ einfach durchführbar und besteht im wesentlichen aus dem Lösen einer quadratischen Gleichung. Die Rechnung kann beispielsweise wie folgt durchgeführt werden.

(1)    $t_{12} - t_1 = (\rho_2 + \rho_{12} - \rho_1)/c$

(2)    $x_2 = y_2 \tan \theta_2$

(3)    $z_2 = h_2$

$t_{12} - t_1$: Umlaufzeit, die gemessen wird

$\theta_2, h_2$: werden gemessen

$\rho_1$: bekannt

$$\rho_1 = \sqrt{x_1^2 + y_1^2 + z_1^2}$$

$x_1, y_1, z_1$ ... Koordinaten der eigenen Position

<u>Lösung des Ortungsproblems:</u>

Umformen von (1) ergibt:

(4)    $c(t_{12} - t_1) + \rho_1 = \rho_{12} + \rho_2$

Die Größen der linken Seite sind bekannt und werden in der Größe A zusammengefaßt

(5)    $A = c(t_{12} - t_1) + \rho_1$

(4) kann nun wie folgt geschrieben werden:

$$(6) \qquad A - \rho_2 = \sqrt{(x_1 - x_2)^2 + (y_1 - y_2)^2 + (z_1 - z_2)^2}$$

Quadrieren der Gleichung ergibt

(7)    $A^2 - 2\rho_2 A = \rho_2^2 = \rho_1^2 + \rho_2^2 - 2(x_1 x_2 + y_1 y_2 + z_1 z_2)$

Mit (2) kann (7) wie folgt vereinfacht werden

(8)    $A^2 - 2A\rho_2 = \rho_1^2 - y_2 2(x_1 \tan\theta_2 = y_1) - 2 z_1 z_2$

Mit

$$(9) \quad \rho_2 = \sqrt{y_2^2(1 + \tan^2\theta_2) + z_2^2}$$

folgt aus (8)

$$(10) \; 2A\sqrt{y_2^2(1 + \tan^2\theta_2) + z_2^2} = A^2 + 2z_1 z_2 - \rho_1^2$$
$$+ 2(x_1 \tan\theta_2 + y_1) y_2$$

Mit den Abkürzungen

(11)    $B = \rho_1^2 - 2 z_1 z_2 - A^2$

(12)    $D = 2(x_1 \tan\theta_2 + y_1)$

erhält man aus (10) die quadratische Gleichung (13)    $[4A^2(1 + \tan^2\theta_2) - D^2] y_2^2 + 2 BD y_2 + 4 A^2 z_2^2 - B^2 = 0$

oder

$a_2 y_2^2 = a_1 y_2 + a_0 = 0$

4

mit den Koeffizienten

$a_2 = 4A^2 (1 + \tan^2\theta_2) - D^2$

$a_1 = 2 BD$

$a_o = 4 A^2 z_2^2 - B^2$

Gleichung (13) liefert für $y_2$ zwei Lösungen mit unterschiedlichen Vorzeichen. Die richtige Lösung wird mit Hilfe des Azimuts $\theta_2$ bestimmt.

Es gelten folgende Regeln:

$$(14) \qquad \left. \begin{array}{l} 0° < \theta_2 < 90° \\[2mm] 270° < \theta_2 < 360° \end{array} \right\} \quad \rightarrow \quad y_2 \text{ ist positiv}$$

$$(15) \qquad 90° < \theta_2 < 270° \qquad \rightarrow \quad y_2 \text{ ist negativ}$$

$x_2$ ergibt sich aus der Beziehung (2)

Nach dieser Rechnung ist die Position 2 vollständig bestimmt.

Der Azimutwinkel und die Höhe des Flugzeuges 2 sind aus den empfangenen Daten bekannt. Die Genauigkeit der Streckenmessung $\rho_2$ hängt ab von

a) der Genauigkeit der Position $(x_1, y_1, z_1)$ des abstandsmessenden Flugzeuges 1, speziell von der Genauigkeit der Schrägentfernungsmessung $\rho_1$

b) den Genauigkeiten der einzelnen Zeitmessungen:

$-t_1$ Empfangszeitpunkt der Bodenantwort im Flugzeug 1

$-t_2$ Empfangszeitpunkt der Bodenantwort und Sendezeitpunkt der Bodenantwort im Flugzeug 2

$-t_{12}$ Empfangszeitpunkt der Bordantwort im Flugzeug 1.

Aus diesen Überlegungen ergibt sich, daß die Schrägentfernung $\rho_2$ des Flugzeuges 2 an Bord des Flugzeuges 1 nicht mit der gleichen Genauigkeit bestimmbar ist, wie dies am Boden möglich ist.

Nicht in jedem Fall muß die exakte Position des fremden Flugzeuges berechnet werden. In den meisten Fällen kann durch einfache Größenabschätzung entschieden werden, ob von dem sich im gleichen Luftraum befindlichen Flugzeug 2 eine Bedrohung ausgeht.

Eine Bedrohung liegt vor, wenn

-die Umweglaufzeit $t_{12}-t_1$ und die Winkeldifferenz $|\theta_1-\theta_2|$ vorgegebene Werte unterschreiten und

-fur die Höhenstaffelung vorgeschriebene Werte unterschritten werden.

(z.B.: Flugzeuge mit einer Umweglaufzeit $\geq 50\ \mu s$ sind mindestens 7,5 km weit entfernt).

In der horizontalen Ebene lassen sich Mindestabstände als Alarmschwellen nur schwer definieren. Die Alarmschwellen hängen ganz wesentlich von den Relativgeschwindigkeiten der sich begegnenden Flugzeuge ab. Bei dem hier vorgestellten Kollisionsschutzverfahren können die Annäherungsgeschwindigkeit und die Zeit $\tau$ bis zum Erreichen des Konfliktpunktes mit Hilfe von Tracking-Filtern, z.B. den in der Radartechnik üblichen $\alpha\beta$-Filtern, geschätzt werden. Wegen der hohen Datenerneuerungsrate des Dreiweg-DME besitzt diese Schätzung jedoch auch bei beschleunigtem Flug oder Kurvenflug des fremden Flugzeugs 2 eine große Genauigkeit.

Das beschriebene Verfahren ist eine Systemerweiterung des DME bzw. Dreiweg-DME um eine Kollisionsschutz-Komponente und stellt damit eine Systemverbesserung dar. Da das Kollisionsschutzsystem passiv arbeitet, werden weder zusätzliche Frequenzen benötigt, noch wird der normale DME bzw. Dreiweg-DME Betrieb gestört.

Bezeichnungen:

| | |
|---|---|
| $t_{12}-t_1$ | Umweglaufzeit |
| $\rho_2$ | Schrägentfernung Boden $\rightarrow$ Flgz. 2 |
| $\rho_1$ | Schrägentfernung Boden $\rightarrow$ Flgz. 1 |
| $\rho_{12}$ | Schrägentfernung Flzg. 1 $\rightarrow$ Flzg.2 |
| $\vartheta_2$ | Azimut des Flzg. 2 |
| $h_2$ | Flughöhe des Flzg. 2 |
| $c$ | Lichtgeschwindigkeit |
| $x_2$, $y_2$, $z_2$ | Kartesische Koordinaten des Flzg. 2 (Koordinatenursprung ist der Antennenschwerpunkt der Bodenstation) |

**Ansprüche**

Verfahren zur Positionsbestimmung eines Flugzeuges in einem Dreiweg-DME-System mit einer Bodenstation, bei dem die beteiligten Flugzeuge mit einem Bordsystem mit einem Sender und einem Empfänger mit einer breit abstrahlenden Antenne ausgerüstet sind, wobei das Flugzeug zum Zwecke einer Abstandsmessung eine Abfrage an die Bodenstation richtet, von der Bodenstation dem Flugzeug die von der Bodenstation ermittelten Werte mit einem Antwortsignal übermittelt und das Flugzeug nach Errechnung der Position unter Verwendung der von der Bodenstation übermittelten Werte in seinem Bordsystem die Positionsdaten der Bodenstation übermittelt, dadurch gekennzeichnet, daß mittels des Bordsystems eines an einer Abfrage unbeteiligten Flugzeuges (1) während der Abfrage eines anderen Flugzeuges (2) die Laufzeit des von der Dreiweg-DME-Bodenstation ausgestrahlten Bodensignals direkt und zusätzlich die Laufzeit dieses Bodensignals zum abfragenden Flugzeug zuzüglich der Laufzeit des Antwortsignals des abfragenden Flugzeuges zu dem an der Abfrage unbeteiligten Flugazeug gemessen wird und unter Verwendung der von dem abfragenden Flugzeug gesendeten Angaben über dessen Höhe und Azimut und der eigenen Position des an der Abfrage unbeteiligten Flugzeuges die Position des abfragenden Flugzeuges mit den drei Standflächen nach den Gleichungen

a) $t_{12}-t_1 = (\rho_2 + \rho_{12} - \rho_1)/c$

b) $x_2 = y_2 \tan \theta_2$
c) $z_2 = h_2$
errechnet wird.

7

Fig. 1

Fig. 2